# EUROPÄISCHE PATENTSCHRIFT

(11) **EP 2 141 381 B1**
(45) Veröffentlichungstag und Bekanntmachung des Hinweises auf die Patenterteilung: **27.04.2011**
(21) Anmeldenummer: 09163315.6
(22) Anmeldetag: 19.06.2009
(51) Int. Cl.: F16F 9/04, F16F 13/08, F16F 13/20, F16F 13/22

(54) **Schaltbares Luftlager**
Switchable air bearing
Support pneumatique commutable

(30) Priorität: 03.07.2008 DE 102008031497
(43) Veröffentlichungstag der Anmeldung: 06.01.2010
(73) Patentinhaber: Trelleborg Automotive Germany GmbH, 56203 Höhr-Grenzhausen (DE)
(72) Erfinder: Winter, Henry, 57629, Steinebach (DE); Mews, Ulrich, 56203, Höhr-Grenzhausen (DE); Eisel, Eric, 56242, Ellenhausen (DE)
(74) Vertreter: Preissner, Nicolaus

(56) Entgegenhaltungen:
- EP-A1- 1 063 446
- DE-A1- 19 952 638
- DE-A1-102004 008 401

## Beschreibung

Die vorliegende Erfindung betrifft ein schaltbares Luftlager, insbesondere Motorlager für Kraftfahrzeuge, mit einer Arbeitskammer, die von einer elastomeren Tragfeder und einer Bodenplatte, in der ein Düsenkanal eingebracht ist, der mit der Umgebung verbunden ist, begrenzt wird und mit einem Gas, insbesondere Luft, gefüllt ist.

Aus der DE 10 2004 008 401 A1 geht ein pneumatisch dämpfendes Lager der eingangs genannten Art hervor, das eine elastomere Tragfeder und eine Bodenplatte aufweist, die den Arbeitsraum begrenzen. In der Bodenplatte ist ein Düsenkanal eingebracht, der den Arbeitsraum mit der Umgebung verbindet. Es hat sich gezeigt, dass ein derartiges Lager im Leerlauf eine unzureichende Isolationswirkung aufweist.

Aus der DE-PS 616971 geht ein pneumatisch dämpfendes Lager hervor, dessen zylinderförmige Arbeitskammer durch eine Tragfeder und zwei endseitigen Platten begrenzt wird. Hierbei weist eine der endseitigen Platten zwei Bohrungen auf, wobei eine der Bohrungen mit einer einstellbaren Drosselvorrichtung verbunden ist. Die andere Bohrung ist mit einem Ventil verbunden, das den Luftweg lediglich in eine Richtung freigibt und in die andere Richtung verschließt.

Der Erfindung liegt die Aufgabe zugrunde, ein Lager der eingangs genannten Art anzugeben, bei dem eine dynamische Verhärtung im Leerlauf verhindert wird.

Zur Lösung dieser Aufgabe wird bei einem pneumatisch dämpfenden Lager der eingangs genannten Art vorgeschlagen, dass in der Bodenplatte ein Bypasskanal eingebracht ist, der die Arbeitskammer mit der Umgebung verbindet, und dass der Bypasskanal mittels eines schaltbaren Aktors freigebbar oder verschließbar ist.

Vorteilhafte Ausgestaltungen sind Gegenstand der Unteransprüche.

Bei dem erfindungsgemäßen Lager ist in der Bodenplatte ein Bypasskanal eingebracht, der die Arbeitskammer mit der Umgebung verbindet, und der Bypasskanal mittels eines schaltbaren Aktors freigebbar oder verschließbar ist. Durch Zuschalten des Bypasskanals im Leerlauf tritt keine dynamische Verhärtung auf, so dass eine bessere Isolationswirkung im Leerlauf erzielt wird. Daraus ergibt sich ein erhöhter Fahrkomfort, insbesondere im Leerlaufbetrieb.

Vorteilhaft ist der Aktor mittels Vakuum oder elektrisch schaltbar. Bei einem elektrisch geschalteten Aktor wird das Stellglied elektrisch betätigt.

In einer vorteilhaften Ausgestaltung weist der Aktor ein Aktorgehäuse auf, in dem ein Stellglied aufgenommen ist. Das Aktorgehäuse kann separat ausgebildet und an der Bodenplatte befestigt sein. Es ist jedoch auch möglich, auf das separate Aktorgehäuse zu verzichten, und den Aktor in die Bodenplatte zu integrieren.

Das Aktorgehäuse weist vorteilhaft an seinem Innenumfang einen Absatz auf, auf dem das Stellglied aufliegt.

Der Absatz ist vorteilhaft abgerundet, so dass während der Schaltstellung im Randbereich des Stellglieds keine Kerbwirkungen auftreten, die zu einer Zerstörung des Stellglieds führen.

In weiterer Ausgestaltung ist im oberen Wandbereich des Aktorgehäuses mindestens eine Ausströmöffnung vorgesehen, die mit der Umgebung verbunden ist. Mittels der Ausströmöffnung kann die Luft aus der Arbeitskammer in die Umgebung entweichen.

Das Stellglied des Aktors ist vorteilhaft zylinderförmig mit einem randseitigen flexiblen Befestigungsbereich, der zur Festlegung des Aktors an dem Aktorgehäuse und dem Absatz dient, ausgebildet. Vorteilhafterweise zeichnet sich ein derartiges Stellglied durch einen geringen Verschleiß und somit einer hohe Standzeit aus. Des Weiteren besitzt es eine sehr gute Abdichtung.

In weiterer vorteilhafter Ausgestaltung liegt das Stellglied im eingebauten Zustand mit Vorspannung an dem Aktorgehäuse an. Hierbei wird die Vorspannung des Stellglieds aufgrund der Materialeigenschaften und des Einbaus erzielt.

Vorteilhaft wird eine Vakuumkammer durch das Aktorgehäuse und das Stellglied begrenzt.

In weiterer vorteilhafter Ausgestaltung ist im Boden des Aktorgehäuses eine Öffnung vorgesehen, die mit einer Vakuumquelle verbindbar ist. Durch Aufbringen eines Vakuums wir der Aktor geschalten. Hierzu können die im Fahrzeug vorhandenen Vakuumquellen verwendet werden, so dass keine zusätzliche Vakuumquelle benötigt wird.

Bei einer weiteren Ausgestaltung weist die Bodenplatte einen Flansch zur Befestigung an der Fahrzeugkarosserie auf.

Nachfolgend wird die Erfindung anhand von Ausführungsbeispielen näher erläutert, die in den Zeichnungen schematisch dargestellt sind. Hierbei zeigen:
- Fig. 1: einen Vertikalschnitt durch eine erste Ausführungsform des er- findungsgemäßen Lagers im geschalteten Zustand;
- Fig. 2: einen Schnitt längs der Linie II-II in Fig. 1 im ungeschalteten Zustand;
- Fig. 3: eine perspektivische Einzeldarstellung des Stellglieds;
- Fig. 4: eine perspektivische Einzeldarstellung des Aktorgehäuses;
- Fig. 5: eine perspektivische Einzeldarstellung der Bodenplatte und
- Fig. 6: eine graphische Darstellung der gemessenen Sitzschienenbe- schleunigung unterschiedlicher Lagertypen für die im Leerlauf typischen Anregungsfrequenzen.

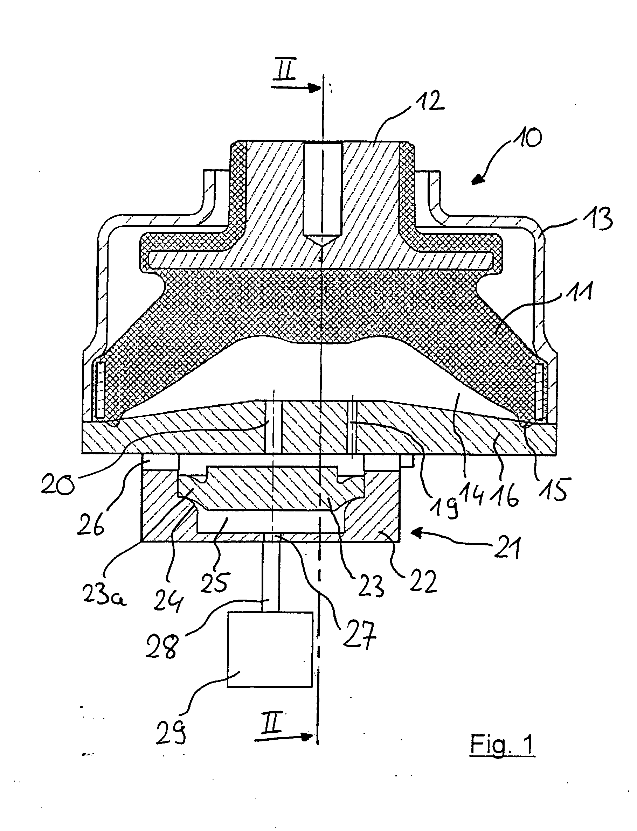

Fig. 1 zeigt ein schaltbares Luftlager 10, das als Motorlager bei Kraftfahrzeugen zum Einsatz kommt. Das Lager 10 weist eine Tragfeder 11 aus Elastomermaterial auf, die einen motorseitigen Lagerkern 12 mit einer Sacklochbohrung abstützt. Die Tragfeder 11 stützt sich randseitig an einem Gehäuse 13 und einer Bodenplatte 16 ab. Die Tragfeder 11 ist mit einer angeformten Dichtung 15 versehen.

Das Gehäuse 13 ist hohlzylinderförmig ausgebildet und dient zur Aufnahme der Tragfeder 11. Das Gehäuse 13 weist einen randseitig abkragenden Flansch 17 auf, in dem ein Gewinde vorgesehen ist, das zur Festlegung des Gehäuses an der Bodenplatte 16 dient.

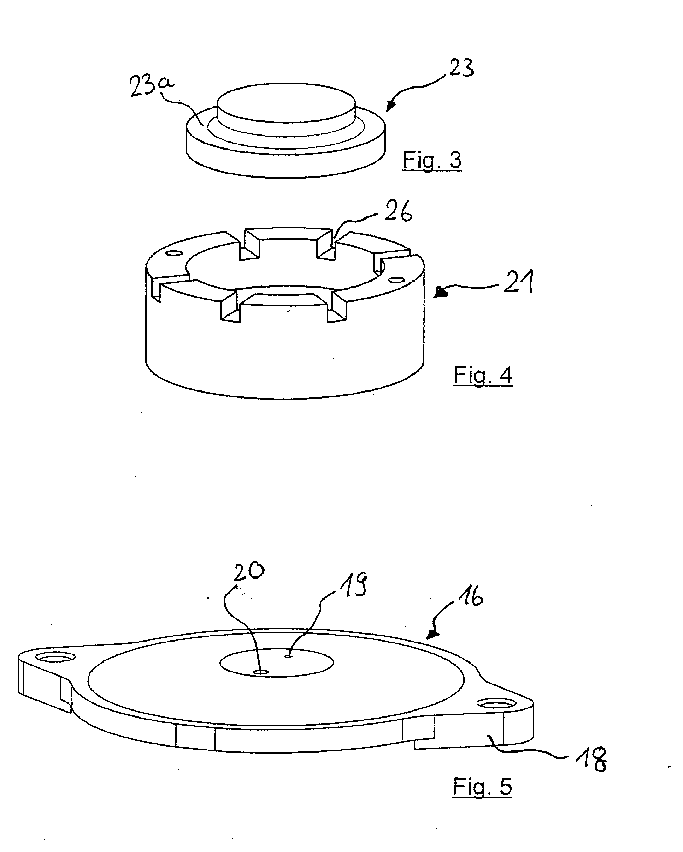

Die Tragfeder 11 und die Bodenplatte 16 begrenzen die Arbeitskammer 14. Die Arbeitskammer 14 ist über einen Düsenkanal 19 und einen Bypasskanal 20, die jeweils in der Bodenplatte 16 eingebracht sind, mit der Umgebung verbunden. Fig. 5 zeigt die Bodenplatte 16, in der ein Düsenkanal 19 und ein Bypasskanal 20 angeordnet sind. Die Bodenplatte 16 weist zur Arbeitskammer 14 hin eine Wölbung auf. Der Düsenkanal 19 und der Bypasskanal 20 sind etwas versetzt vom Mittelpunkt der Bodenplatte 16 angeordnet. Weiterhin ist die Bodenplatte 16 als Halter 18 ausgebildet, an dem das schaltbare Luftlager 10 an der Fahrzeugkarosserie festgelegt werden kann. Das Gehäuse 13 wird über den Flansch 17 an dem Halter 18 der Bodenplatte 16 fixiert.

Fig. 1 zeigt die räumliche Anordnung des Aktors 21 innerhalb des schaltbaren Luftlagers 10. Der Aktor 21 ist unterhalb der Bodenplatte 16 angebracht. Der Aktor 21 weist ein Stellglied 23, das aus einem elastomeren Material geformt ist, und ein Aktorgehäuse 22 auf.

Fig. 4 zeigt das Aktorgehäuse 22 des Aktors 21, das als Hohlzylinder ausgebildet ist. An seinem Innenumfang weist das Aktorgehäuse 22 einen Absatz 24 auf, der abgerundet ist. Weiterhin besitzt das Aktorgehäuse 22 im oberen Wandbereich mehrere Austrittsöffnungen 26, die sowohl den Düsenkanal 19 als auch den Bypasskanal 20 mit der Umgebung verbinden.

Fig. 1 zeigt eine perspektivische Darstellung des Aktorgehäuses 22. Der Boden des Aktorgehäuses 22 ist mit einer Öffnung 27 versehen, die über eine Vakuumleitung 28 mit einer Vakuumquelle 29 verbindbar ist.

In Fig. 3 ist das Stellglied 23 gezeigt, das zylinderförmig ausgebildet ist und über einen randseitigen flexiblen Befestigungsbereich 23a verfügt. Das Stellglied 23 stützt sich über seinen randseitigen flexiblen Befestigungsbereich 23a auf dem Absatz 24 des Gehäuses 22 ab. Das Stellglied 23 liegt mit Vorspannung an der Bodenplatte 16 an und verschließt den Bypasskanal 20 in der Schließstellung.

Die Vakuumkammer 25 wird durch das Stellglied 23 und das Aktorgehäuse 22 begrenzt. Hierbei weist die Vakuumkammer 25 über die Öffnung 27 im Boden des Aktorgehäuses 22 eine Verbindung zu einer Vakuumleitung 28 auf.

Die Steuerung des Aktors 21 erfolgt durch Anlegen eines Vakuums über die Vakuumleitung 28 an einer Vakuumquelle 29.

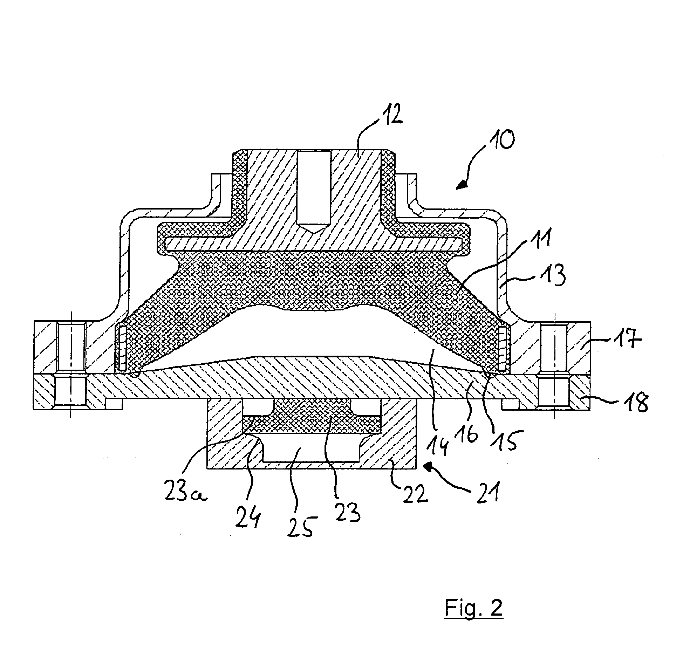

Fig. 2 zeigt den Aktor 21 in seiner Schließstellung. In dieser Schaltposition, die im Fahrzustand vorliegt, liegt kein Vakuum an, so dass das Stellglied 23 durch seine Vorspannung den Bypasskanal 20 verschleißt. In der Schließstellung strömt, die in der Arbeitskammer 14 vorhandene Luft, nur über den Düsenkanal 19 in die Umgebung. Dadurch wird auch bei Ausfall der Vakuumquelle 29 eine sichere Funktion des schaltbaren Luftlagers 10 erzielt.

Fig. 1 zeigt den Aktor 21 in seiner Offenstellung, die durch Anlegen eines Vakuums an der Vakuumkammer 25 erreicht wird. Hierbei wird das Stellglied 23 vertikal nach unten gezogen. Dadurch wird der Bypasskanal 20 freigegeben. In diesem Schaltzustand ist sowohl der Düsenkanal 19 als auch der Bypasskanal 20 freigegeben und mit der Umgebung verbunden. Die Luft aus der Arbeitskammer 14 kann, sowohl über den Düsenkanal 19 als auch den Bypasskanal 20 in die Umgebung strömen.

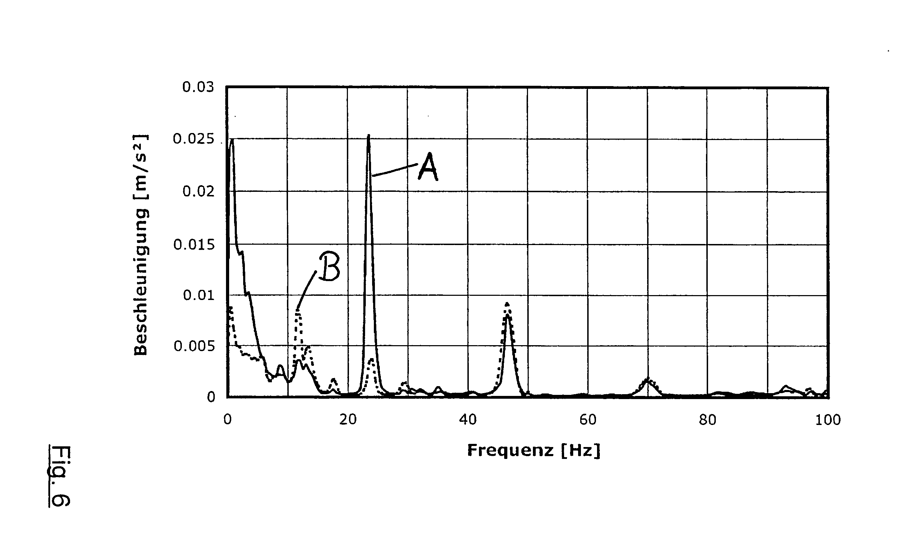

In Fig. 6 sind graphisch die gemessenen Beschleunigungen von zwei unterschiedlichen Lagern im Leerlaufbetrieb dargestellt. Die Beschleunigungen werden durch Anbringen von Sensoren an der Sitzschiene gemessen. Messkurve A stellt ein konventionelles Luftlager und Messkurve B das schaltbare Luftlager 10 dar. Aus der graphischen Darstellung ist ersichtlich, dass bei konventionellen Luftlagern für Anregungsfrequenzen oberhalb der Dämpfungsfrequenz eine Zunahme der dynamischen Steifigkeit auftritt. Hierbei wird das Niveau der dynamischen Steifigkeit durch die statische Grundsteifigkeit, die Materialdämpfung sowie die Kompressibilität der Luft bestimmt.

Die Kompressibilität der Luft trägt wesentlich zur dynamischen Verhärtung eines Luftlagers bei. Das erfindungsgemäße schaltbare Luftlager 10 eliminiert den Anteil der Luft an der dynamischen Verhärtung durch Zuschalten des Bypasskanals 20 mittels Vakuum. Durch Zuschalten des Bypasskanals 20 erfolgt kein Druckaufbau in der Arbeitskammer 14, so dass das schaltbare Luftlager 10 im geschalteten Zustand nicht verhärtet und so, insbesondere im Leerlauf, eine verbesserte Isolationswirkung aufweist.

### Bezugszeichenliste

- 10: schaltbares Luftlager
- 11: Tragfeder
- 12: Lagerkern
- 13: Lagergehäuse
- 14: Arbeitskammer
- 15: Dichtung
- 16: Bodenplatte
- 17: Flansch
- 18: Halter
- 19: Düsenkanal
- 20: Bypasskanal
- 21: Aktor
- 22: Aktorgehäuse
- 23: Stellglied
- 23a: Befestigungsbereich
- 24: Absatz
- 25: Vakuumkammer
- 26: Ausströmöffnung
- 27: Öffnung
- 28: Vakuumleitung
- 29: Vakuumquelle

## Patentansprüche

1. Schaltbares Luftlager (10), insbesondere Motorlager für Kraftfahrzeuge, mit einer Arbeitskammer (14), die von einer elastomeren Tragfeder (11) und einer Bodenplatte (16), in der ein Düsenkanal (19) eingebracht ist, der mit der Umgebung verbunden ist, begrenzt wird und mit einem Gas, insbesondere Luft, gefüllt ist, **dadurch gekennzeichnet, dass** in der Bodenplatte (16) ein Bypasskanal (20) eingebracht ist, der die Arbeitskammer (14) mit der Umgebung verbindet, und dass der Bypasskanal (20) mittels eines schaltbaren Aktors (21) freigebbar oder verschließbar ist.

2. Schaltbares Luftlager (10) nach Anspruch 1, **dadurch gekennzeichnet, dass** der Aktor (21) mittels Vakuum oder elektrisch schaltbar ist.

3. Schaltbares Luftlager (10) nach Anspruch 1 oder 2, **dadurch gekennzeichnet, dass** der Aktor (21) ein Aktorgehäuse (22) aufweist, in dem ein Stellglied (23) aufgenommen ist.

4. Schaltbares Luftlager (10) nach Anspruch 3, **dadurch gekennzeichnet, dass** das Aktorgehäuse (22) an seinem Innenumfang einen Absatz (24) aufweist, auf dem das Stellglied (23) aufliegt.

5. Schaltbares Luftlager (10) nach Anspruch 4, **dadurch gekennzeichnet, dass** der Absatz (24) abgerundet ist.

6. Schaltbares Luftlager (10) nach einem der Ansprüche 3 bis 5, **dadurch gekennzeichnet, dass** im oberen Wandbereich des Aktorgehäuses (22) mindestens eine Ausströmöffnung (26) vorgesehen ist, die mit der Umgebung verbunden ist.

7. Schaltbares Luftlager (10) nach einem der Ansprüche 4 bis 6, **dadurch gekennzeichnet, dass** das Stellglied (23) zylinderförmig mit einem randseitigen flexiblen Befestigungsbereich (23a), der zur Festlegung des Lagers an dem Aktorgehäuse (22) und dem Absatz (24) dient, ausgebildet ist.

8. Schaltbares Luftlager (10) nach einem der Ansprüche 3 bis 7, **dadurch gekennzeichnet, dass** das Stellglied (23) im eingebauten Zustand mit Vorspannung an dem Aktorgehäuse anliegt.

9. Schaltbares Luftlager (10) nach Anspruch 3, **dadurch gekennzeichnet, dass** eine Vakuumkammer (25) durch das Aktorgehäuse (22) und das Stellglied (23) begrenzt ist.

10. Schaltbares Luftlager (10) nach Anspruch 9, **dadurch gekennzeichnet, dass** im Boden des Aktorgehäuses (22) eine Öffnung (27) vorgesehen ist, die mit einer Vakuumquelle verbindbar ist.

11. Schaltbares Luftlager (10) nach einem der Ansprüche 1 bis 10, **dadurch gekennzeichnet, dass** die Bodenplatte (16) einen Flansch (18) zur Befestigung an der Fahrzeugkarosserie aufweist.

## Claims

1. Switchable air bearing (10), in particular engine mounting for motor vehicles, having a working chamber (14) which is delimited by an elastomeric bearing spring (11) and a base plate (16), into which a nozzle channel (19) is introduced which is connected to the surroundings, and is filled with a gas, in particular air, **characterized in that** a by-pass channel (20) which connects the working chamber (14) to the surroundings is introduced into the base plate (16), and **in that** the by-pass channel (20) can be opened or closed by means of a switchable actuator (21).

2. Switchable air bearing (10) according to Claim 1, **characterized in that** the actuator (21) can be switched by means of vacuum or electrically.

3. Switchable air bearing (10) according to Claim 1 or 2, **characterized in that** the actuator (21) has an actuator housing (22), in which an actuating element (23) is accommodated.

4. Switchable air bearing (10) according to Claim 3, **characterized in that** the actuator housing (22) has a shoulder (24) on its inner circumference, on which shoulder (24) the actuating element (23) rests.

5. Switchable air bearing (10) according to Claim 4, **characterized in that** the shoulder (24) is rounded.

6. Switchable air bearing (10) according to one of Claims 3 to 5, **characterized in that** at least one outflow opening (26) which is connected to the surroundings is provided in the upper wall region of the actuator housing (22).

7. Switchable air bearing (10) according to one of Claims 4 to 6, **characterized in that** the actuating element (23) is of cylindrical configuration with an edge-side flexible fastening region (23a) which serves to fix the bearing on the actuator housing (22) and the shoulder (24).

8. Switchable air bearing (10) according to one of Claims 3 to 7, **characterized in that**, in the installed state, the actuating element (23) bears with prestress against the actuator housing.

9. Switchable air bearing (10) according to Claim 3, **characterized in that** a vacuum chamber (25) is delimited by the actuator housing (22) and the actuating element (23).

10. Switchable air bearing (10) according to Claim 9, **characterized in that** an opening (27) which can be connected to a vacuum source is provided in the bottom of the actuator housing (22).

11. Switchable air bearing (10) according to one of Claims 1 to 10, **characterized in that** the base plate (16) has a flange (18) for fastening to the vehicle body.

## Revendications

1. Support pneumatique commutable (10), en particulier support de moteur pour véhicule automobile, comprenant une chambre de travail (14) qui est délimitée par un ressort porteur en élastomère (11) et par une plaque de fond (16), dans laquelle est ménagé un canal à tuyère (19) qui est relié à l'environnement, et qui est remplie d'un gaz, en particulier d'air, **caractérisé en ce que** qu'un canal de by-pass (20) est ménagé dans la plaque de fond (16), lequel relie la chambre de travail (14) à l'environnement, et **en ce que** le canal de by-pass (20) peut être dégagé ou refermé au moyen d'un actionneur commutable (21).

2. Support pneumatique commutable (10) selon la revendication 1, **caractérisé en ce que** l'actionneur (21) est commutable au moyen d'un vide ou par voie électrique.

3. Support pneumatique commutable (10) selon la revendication 1 ou 2, **caractérisé en ce que** l'actionneur (21) comprend un boîtier d'actionneur (22) dans lequel est reçu un organe de positionnement (23).

4. Support pneumatique commutable (10) selon la revendication 3, **caractérisé en ce que** le boîtier d'actionneur (22) comporte à sa périphérie intérieure un talon (24) sur lequel repose l'organe de positionnement (23).

5. Support pneumatique commutable (10) selon la revendication 4, **caractérisé en ce que** le talon (24) est arrondi.

6. Support pneumatique commutable (10) selon l'une des revendications 3 à 5, **caractérisé en ce que**, dans la région supérieure de la paroi du boîtier d'actionneur (22) il est prévu au moins une ouverture d'échappement (26) laquelle est reliée à l'environnement.

7. Support pneumatique commutable (10) selon l'une des revendications 4 à 6, **caractérisé en ce que** l'organe de positionnement (23) est réalisé sous forme cylindrique avec une zone de fixation flexible (23a) du côté de sa bordure, qui sert à immobiliser le support sur le boîtier d'actionneur (22) et sur le talon (24).

8. Support pneumatique commutable (10) selon l'une des revendications 3 à 7, **caractérisé en ce que** l'organe de positionnement (23) est appliqué, dans l'état monté, avec précontrainte contre le boîtier d'actionnement.

9. Support pneumatique commutable (10) selon la revendication 3, **caractérisé en ce qu'**une chambre à vide (25) est délimitée par le boîtier d'actionneur (22) et par l'organe de positionnement (23).

10. Support pneumatique commutable (10) selon la revendication 9, **caractérisé en ce que** dans le fond du boîtier d'actionneur (22) il est prévu une ouverture (27) qui peut être connectée à une source de vide.

11. Support pneumatique commutable (10) selon l'une des revendications 1 à 10, **caractérisé en ce que** la plaque de fond (16) comprend une bride (18) pour la fixation sur la carrosserie du véhicule.
